# EUROPÄISCHE PATENTANMELDUNG

(11) **EP 4 417 382 A1**
(43) Veröffentlichungstag der Anmeldung: **21.08.2024**
(21) Anmeldenummer: 24156883.1
(22) Anmeldetag: 09.02.2024
(51) Int. Cl.: B26B 25/00, A22B 5/16

(54) **FLEISCH-TRIMMER UND MESSERSCHNELLWECHSELSYSTEM HIERFÜR**

(30) Priorität: 13.02.2023 DE 202023100684 U
(71) Anmelder: FREUND Maschinenfabrik GmbH & Co. KG, 33100 Paderborn (DE)
(72) Erfinder: EWERS, Christoph, 34439 Willesbadessen (DE)
(74) Vertreter: Wickord, Wiro

(57) **Zusammenfassung**

Die Erfindung betrifft ein Messer-Schnellwechselsystem (2) für einen Fleisch-Trimmer (1), welches eine werkzeuglose De-/Montage eines Kreismessers (5) ermöglicht, umfassend ein an einen Handgriff (10) des Fleisch-Trimmers (1) montierbares Getriebegehäuse (3), eine an dem Getriebegehäuse (3) gehaltene Messerführung (4) mit einer kreisförmigen Entnahmeöffnung (11) zur Aufnahme des darin um eine Drehachse (D) rotierbaren Kreismessers (5), ein an dem Getriebegehäuse (3) und/oder der Messerführung (4) über wenigstens ein erstes Verbindungsmittel (8.1, 8.2) gehaltenes Arretierelement (6), wobei das Arretierelement (6) radial verschiebbar in Bezug auf die Drehachse (D) geführt ist derart, dass das Arretierelement (6) aus einer Arretierstellung, in der das Arretierelement (6) jedenfalls abschnittsweise in die Entnahmeöffnung (11) hineinragt, verbringbar ist in eine Entnahmestellung, in der die Entnahmeöffnung (11) gegenüber dem Arretierelement (6) freigelegt ist, und zurück, wobei in dem Getriebegehäuse (3) und/oder der Messerführung (4) eine Vertiefung (9) vorgesehen ist und das Arretierelement (6) mit einem in Bezug auf die Drehachse (D) axialen Spiel (S) zwischen dem ersten Verbindungsmittel (8.1, 8.2) und der Vertiefung (9) gehalten ist und wobei dem Arretierelement (6) ein Kraftmittel (7) zugeordnet ist, welches in einer Ruhestellung eine zur Drehachse (D) gerichtete und das Arretierelement (6) in der Arretierstellung haltende Stellkraft aufbringt.

## Beschreibung

Die vorliegende Erfindung betrifft einen Fleisch-Trimmer sowie ein Messerschnellwechselsystem hierfür.

Fleisch-Trimmer werden insbesondere in der Fleischindustrie bei der Schlachtung und Zerlegung von Schlachttierkörpern als ein universelles Schneidwerkzeug eingesetzt. Darüber hinaus finden Sie beispielsweise Verwendung als Schneidwerkzeug in der Fischindustrie. Fleisch-Trimmer sind in der Regel als ein Handwerkzeug ausgebildet und weisen typischerweise neben einem Handgriff ein sich daran anschließendes Getriebegehäuse, in dem ein Zahnrad beziehungsweise Ritzel aufgenommen ist, und eine sich an das Getriebegehäuse anschließende Messerführung auf, in der ein typischerweise ringförmiges und rotatorisch über das Ritzel antreibbares Kreismesser geführt ist. Der Antrieb des Kreismessers kann wahlweise über einen pneumatischen oder elektrischen Antrieb erfolgen, wobei hierfür die Fleisch-Trimmer im Regelfall über eine an den Handgriff koppelbare beziehungsweise in dem Handgriff abschnittsweise geführte Pneumatikleitung oder eine biegeflexible Antriebswelle mit einem externen Antriebsmotor verbunden sind. Die Kreismesser der Fleisch-Trimmer ermöglichen gegenüber der Zerlegung mit einem Handmesser ein ebenmäßigeres und gleichmäßigeres Schnittbild sowie eine Vielzahl unterschiedlicher, sauber und schnell ausführbarer Schnitte, die oftmals mit einem Handmesser nur sehr aufwendig durchführbar sind. Die Einsatzbereiche der Fleisch-Trimmer umfassen beispielsweise die Rückenmarksentfernung, Entfettung, Entbeinung, das Ausschneiden der Brust von Geflügel oder das Entgräten und Heraustrennen dünner Scheiben von Fisch.

Ein im normalen Betrieb wiederkehrendes Problem besteht in der Verschmutzung des Fleisch-Trimmers durch die zu verarbeitenden Schlachttierkörper. Beispielsweise setzt sich bei Gebrauch typischerweise Fett der Schlachttierkörper zwischen dem Schneidmesser und der Messerführung an, welches durch die Rotation des Kreismessers erwärmt und flüssig wird und sich dann als lackartiger Film festsetzt. Dementsprechend müssen die Fleisch-Trimmer zu Reinigungszwecken regelmäßig außer Betrieb genommen und dabei die Kreismesser demontiert werden.

Es besteht insofern ein Bedarf an einem Messer-Schnellwechselsystem für einen Fleisch-Trimmer, welches eine schnelle und unkomplizierte De-/Montage des Kreismessers ermöglicht.

Aus der DE 20 2010 008 081 U1 ist ein Messer-Schnellwechselsystem für Fleisch-Trimmer bekannt. Die Messerführung ist hier an beidseitig armförmigen Auslegern des Getriebegehäuses befestigt und an einem der Ausleger über einen Kopf eines lösbaren Bolzens in einer Arretierstellung an der Messerführung festgelegt. Zur De-/Montage des Kreismessers wird hierbei die Messerführung an einer Trennstelle zwischen den Auslegern aufgebogen, indem der Bolzen gelöst wird. Das hier offenbarte Messer-Schnellwechselsystem ermöglicht eine werkzeuglose De-/Montage des Kreismessers. Gleichwohl ist es hierbei so, dass der Aufbau des Messer-Schnellwechselsystems vergleichsweise komplex ist und aus diversen Einzelteilen besteht, sodass die Fertigung aufwendig ist. Zudem muss hier für die De-/Montage des Kreismessers eine einzelne Bedienperson die Messerführung aufgespreizt halten, während sie versucht das Kreismesser in die Messerführung einzusetzen. Wenn die Bedienperson hierbei nicht vorgeschriebene, schnittsichere Handschuhe trägt, kann hierbei schnell eine Schnittverletzung in der Hand entstehen.

Aufgabe der vorliegenden Erfindung ist es, zur werkzeuglosen De-/Montage eines Kreismessers ein verbessertes Messer-Schnellwechselsystem für einen Fleisch-Trimmer anzugeben. Ferner wird die Aufgabe durch einen Fleisch-Trimmer mit einem erfindungsgemäßen Messer-Schnellwechselsystem gelöst.

Zur Lösung der Aufgabe weist die Erfindung die Merkmale des Anspruchs 1 auf. Demzufolge umfasst ein Messer-Schnellwechselsystem für einen Fleisch-Trimmer, welches eine werkzeuglose De-/Montage eines Kreismessers ermöglicht, ein an einen Handgriff des Fleisch-Trimmers montierbares Getriebegehäuse, eine an dem Getriebegehäuse gehaltene Messerführung mit einer kreisförmigen Entnahmeöffnung zur Aufnahme des darin um eine Drehachse rotierbaren Kreismessers und ein an dem Getriebegehäuse beziehungsweise der Messerführung über wenigstens ein erstes Verbindungsmittel gehaltenes Arretierelement. Das Arretierelement ist radial verschiebbar in Bezug auf die Drehachse geführt derart, dass das Arretierelement werkzeuglos aus einer Arretierstellung, in der das Arretierelement jedenfalls abschnittsweise in die Entnahmeöffnung hineinragt, verbringbar ist in eine Entnahmestellung, in der die Entnahmeöffnung gegenüber dem Arretierelement freigelegt ist, und zurück. In dem Getriebegehäuse beziehungsweise der Messerführung ist eine Vertiefung vorgesehen und das Arretierelement ist mit einem in Bezug auf die Drehachse axialen Spiel zwischen dem ersten Verbindungsmittel und der Vertiefung gehalten. Dem Arretierelement ist ein Kraftmittel zugeordnet, welches in einer Ruhestellung eine zur Drehachse gerichtete und das Arretierelement in der Arretierstellung haltende Stellkraft aufbringt.

Der besondere Vorteil der Erfindung besteht darin, dass das Messer-Schnellwechselsystem aus wenigen, einfach zu fertigenden Komponenten gebildet ist und eine werkzeuglose und schnelle De-/Montage des Kreismessers ermöglicht. Ein erfindungswesentliches Lösungsmerkmal hierfür ist, dass die Messerführung beziehungsweise das Getriebegehäuse eine Vertiefung aufweisen und dass das Arretierelement mit axialem Spiel zwischen der Vertiefung und dem ersten Verbindungsmittel geführt beziehungsweise gelagert ist. Vorteilhaft muss somit das erste Verbindungsmittel nicht zuvor, beispielsweise mittels eines Werkzeugs, gelöst werden, um ein Verschieben des Arretierelements zu ermöglichen. Vielmehr kann das Arretierelement auch bei einem fest montierten beziehungsweise fest angezogenen ersten Verbindungsmittel verschoben werden. Das Kraftmittel hält das Arretierelement dabei in der Arretierstellung als eine Ruhe- beziehungsweise Vorzugsstellung, sodass ohne ein weiteres Zutun eine Freigabe der Entnahmeöffnung durch das Arretierelement und damit ein ungewolltes Verlieren des Kreismessers verhindert sind. Zur De-/Montage des Kreismessers ist es insofern erforderlich, eine der Stellkraft des Kraftmittels entgegengerichtete Handkraft oder dergleichen aufzubringen, um das Arretierelement aus der Arretier- in die Freigabestellung zu verbringen. Einem unbeabsichtigten Lösen beziehungswese Verlieren des Kreismessers im Betrieb ist somit vorgebeugt.

Nach einer bevorzugten Ausführungsform der Erfindung ist das wenigstens eine erste Verbindungsmittel ein lösbares Verbindungsmittel und bevorzugt eine in einer Gewindebohrung aufgenommene Schraube. Vorteilhaft kann somit das Arretierelement, beispielsweise zur Reinigung oder Umrüstung auf einfache Weise de/montiert werden.

Das Getriebegehäuse beziehungsweise die Messerführung weisen vorzugsweise eine zu der Vertiefung erhabene und benachbart angeordnete Anschlagfläche auf, sodass ein Kopf oder dergleichen des ersten Verbindungsmittels stets mit einem ausreichenden Abstand zu der Vertiefung gehalten und sichergestellt ist, dass das Arretierelement mit axialem Spiel zwischen der Vertiefung und dem ersten Verbindungsmittel geführt beziehungsweise gelagert ist.

Vorzugsweise ist die Vertiefung in der Messerführung ausgebildet.

Nach einer Weiterbildung der Erfindung sind zwei erste Verbindungsmittel vorgesehen und das Arretierelement weist an zwei einander gegenüberliegenden Außenseiten jeweils eine taschenförmige längserstreckte Führungsausnehmung auf, in der jeweils eines der ersten Verbindungsmittel geführt ist. Das Arretierelement ist insofern zwischen den ersten Verbindungsmitteln angeordnet, wobei die taschenförmig längserstreckten Führungsausnehmungen und die ersten Verbindungsmittel ineinander greifen und eine Linearführung für das Arretierelement bilden.

Nach einer Weiterbildung der Erfindung ist über eine Länge der wenigstens einen längserstreckten Führungsausnehmung ein Verstellhub des Arretierelements definiert.

Nach einer Weiterbildung der Erfindung ist über das wenigstens eine erste Verbindungsmittel die Messerführung an dem Getriebegehäuse gehalten. Das erste Verbindungsmittel verbindet insofern die Messerführung und das Getriebegehäuse und dient gleichzeitig zur Führung und zur Befestigung des Arretierelements. Diese Multifunktionalität des ersten Verbindungsmittels ermöglicht eine wirtschaftliche Herstellung des erfindungsgemäßen Messer-Schnellwechselsystems mit einer reduzierten Teilezahl.

Bevorzugt ist das Kraftmittel als eine Spiralfeder ausgebildet und kann demzufolge als ein kostengünstig herstellbares Normbauteil ausgebildet sein.

Das Kraftmittel ist vorzugsweise an dem Getriebegehäuse beziehungsweise dem Arretierelement geführt.

Nach einer diesbezüglichen Weiterbildung der Erfindung ist das Kraftmittel jedenfalls abschnittsweise in einer Gehäuseausnehmung des Getriebegehäuses aufgenommen.

Nach einer weiteren diesbezüglichen Weiterbildung der Erfindung weist das Arretierelement einen parallel zu der längserstreckten Führungsausnehmung und in das Kraftmittel eingreifenden Führungssteg auf. Der Führungssteg verhindert ein Abknicken beziehungsweise Verrutschen des Kraftmittels beziehungsweise führt das Kraftmittel in einer definierten Orientierung parallel zu der längserstreckten Führungsausnehmung.

Nach einer Weiterbildung der Erfindung weist die Messerführung wenigstens einen in die Entnahmeöffnung hineinragenden und dem Arretierelement auf gleicher Höhe und in Bezug auf die kreisförmige Entnahmeöffnung im Wesentlichen gegenüberliegenden Vorsprung beziehungsweise einen axial beabstandet zu dem Vorsprung beziehungsweise dem Arretierelement angeordneten Stützvorsprung auf. Der Vorsprung ist vorzugsweise in Bezug auf die Drehachse des Kreismessers auf axial gleicher Höhe zu dem Arretierelement angeordnet. In der Arretierstellung des Arretierelements hält dieses zusammen mit dem Vorsprung und dem Stützvorsprung das Kreismesser positionssicher beziehungsweise kontrolliert ausgerichtet in der Messerführung.

Nach einer Weiterbildung der Erfindung weist das Arretierelement einen an dem Getriebegehäuse beziehungsweise der Messerführung angelegten Grundabschnitt, in dem die wenigstens eine längserstreckte Führungsausnehmung beziehungsweise der Führungssteg ausgebildet sind, sowie einen gegenüber dem Grundabschnitt umgebogenen und von dem Getriebegehäuse beziehungsweise der Messerführung abragenden, handgriffseitig angeordneten Griffabschnitt auf. Der Griffabschnitt dient beim Gebrauch eines Fleisch-Trimmers als Sicherheitselement, welches ein Abrutschen einer Hand eines Bedieners in Richtung der Messerführung und das bei Gebrauch eines Fleisch-Trimmers darin aufgenommene, rotierend angetriebene Kreismesser verhindert. Zudem gibt der Griffabschnitt einen umgreifbaren Bereich an, von dem aus das Arretierelement zur De-/Montage des Kreismessers verschoben beziehungsweise mit einer Handkraft beaufschlagt werden kann. Der Griffabschnitt ragt vorzugsweise mit einem Winkel im Bereich von 60° bis 90° von dem Grundabschnitt ab.

Vorzugsweise ist das Arretierelement als ein Blechbiegebauteil und besonders bevorzugt als ein Stanzblechbiegebauteil hergestellt.

Vorzugsweise ist das Arretierelement symmetrisch geformt und in einer Zusammenbauposition so angeordnet, dass eine Symmetrieachse des Arretierelements die Drehachse des Kreismessers bevorzugt rechtwinklig schneidet beziehungsweise mittig durch die Entnahmeöffnung der Messerführung verläuft. Der Führungssteg ist bevorzugt auf Höhe der Symmetrieachse des Arretierelements positioniert.

Zur Lösung der Aufgabe weist die Erfindung die Merkmale des Anspruchs 11 auf. Demzufolge umfasst ein Fleisch-Trimmer einen Handgriff und ein daran gehaltenes erfindungsgemäßes Messer-Schnellwechselsystem, wobei sich ein Getriebegehäuse des Messer-Schnellwechselsystems an den Handgriff anschließt und wobei an einer dem Handgriff gegenüberliegenden Seite des Getriebegehäuses eine Messerführung des Messer-Schnellwechselsystems gehalten ist. Weiter umfasst der Fleisch-Trimmer ein in dem Getriebegehäuse aufgenommenes und rotatorisch antreibbares Zahnrad und ein in einer kreisförmigen Entnahmeöffnung der Messerführung um eine Drehachse rotierbar gelagertes Kreismesser mit einer Schneidkante und mit einem der Schneidkante gegenüberliegend angeordneten und mit dem Zahnrad in Eingriff stehenden Zahnkranz. Zur werkzeuglosen De-/Montage des Kreismessers ist ein in Bezug auf die Drehachse des Kreismessers radial verschiebbares Arretierelement des Messer-Schnellwechselsystems einem Kraftmittel entgegenwirkend in eine Freigabestellung verbringbar, in der eine Entnahmeöffnung der Messerführung gegenüber dem Arretierelement freigelegt ist.

Der besondere Vorteil der Erfindung besteht darin, dass eine schnelle und werkzeuglose De-/Montage des Kreismessers gegenüber dem Fleisch-Trimmer ermöglicht ist. Diesbezüglich wird die vorherige Beschreibung des erfindungsgemäßen Messer-Schnellwechselsystems in Bezug genommen. Zudem kann der Fleisch-Trimmer im Bereich des Messer-Schnellwechselsystems mit einer geringen Teilezahl und einfachen Komponenten und damit besonders wirtschaftlich gefertigt werden.

Nach einer bevorzugten Ausführungsform der Erfindung ist in dem Handgriff eine mit einem externen Antriebsmotor verbundene biegeflexible Welle rotierbar und axial verschiebbar geführt, wobei die biegeflexible Welle über einen an dem Handgriff gehaltenen Bedienhebel mit dem in dem Getriebegehäuse aufgenommenen Zahnrad in Eingriff und/oder außer Eingriff verbringbar ist. Der Bedienhebel stellt dabei ein Sicherheitselement für den Fleisch-Trimmer ähnlich einer Totmann-Sicherheitseinrichtung dar. Bei Betätigung des Bedienhebels ist die biegeflexible Welle axial zum Zahnrad hin verschoben und mit diesem gekoppelt beziehungsweise in Eingriff, sodass das Kreismesser rotatorisch angetrieben ist. Bei Lösen des Bedienhebels findet eine entgegengesetzte Rückverschiebung der biegeflexiblen Antriebswelle und damit eine Entkopplung zwischen der biegeflexiblen Antriebswelle und dem Zahnrad statt, wodurch die Rotation des Kreismessers gestoppt ist.

Nach einer Weiterbildung der Erfindung sind das Getriebegehäuse und der Handgriff über wenigstens ein lösbares zweites Verbindungsmittel miteinander verbunden, wobei das zweite Verbindungsmittel in Bezug auf eine Rotationsachse des in dem Getriebegehäuse aufgenommenen Zahnrads radial beabstandet zu dem Zahnrad angeordnet ist. Diese Anordnung der zweiten Verbindungsmittel ist besonders vorteilhaft, wenn in dem Handgriff eine axial verschiebbare Antriebswelle geführt ist.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details des erfindungsgemäßen Messer-Schnellwechselsystems gelten selbstverständlich auch im Zusammenhang mit dem erfindungsgemäßen Fleisch-Trimmer und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter. Es zeigen:
- Fig. 1: eine perspektivische Ansicht eines erfindungsgemäßen Fleisch-Trimmers mit einem erfindungsgemäßen Messer-Schnellwechselsystem in einem ersten Ausführungsbeispiel, wobei ein Arretierelement des Messer-Schnellwechselsystems in eine Freigabestellung verbracht ist,
- Fig. 2: eine perspektivische Ansicht des erfindungsgemäßen Fleisch-Trimmers nach Fig. 1 mit dem Arretierelement in einer Arretierstellung,
- Fig. 3: eine perspektivische Frakturansicht eines erfindungsgemäßen Fleisch-Trimmers in einem zweiten Ausführungsbeispiel und mit dem Arretierelement in der Freigabestellung,
- Fig. 4: eine perspektivische Frakturansicht des erfindungsgemäßen Fleisch-Trimmers nach Fig. 3 mit dem Arretierelement in der Arretierstellung,
- Fig. 5: eine unterseitige perspektivische Frakturansicht des erfindungsgemäßen Fleisch-Trimmers nach Fig. 3 mit dem Arretierelement in der Arretierstellung,
- Fig. 6: eine Schnittansicht des erfindungsgemäßen Fleisch-Trimmers nach Fig. 3,
- Fig. 7: eine Explosionseinzelansicht einer Messeführung und eines Arretierelements eines erfindungsgemäßen Messer-Schnellwechselsystems in einem alternativen Ausführungsbeispiel,
- Fig. 8: eine perspektivische Einzelansicht der Messerführung und des daran angelegten Arretierelements des erfindungsgemäßen Messer-Schnellwechselsystems nach Fig. 7,
- Fig. 9: eine perspektivische Einzelansicht des Arretierelements des erfindungsgemäßen Fleisch-Trimmers nach Fig. 3,
- Fig. 10: eine seitliche Einzelansicht des Arretierelements des erfindungsgemäßen Fleisch-Trimmers nach Fig. 3,
- Fig. 11: eine rückwärtige Einzelansicht des Arretierelements des erfindungsgemäßen Fleisch-Trimmers nach Fig. 3 und
- Fig. 12: eine Einzelansicht von oben auf das Arretierelements des erfindungsgemäßen Fleisch-Trimmers nach Fig. 3.

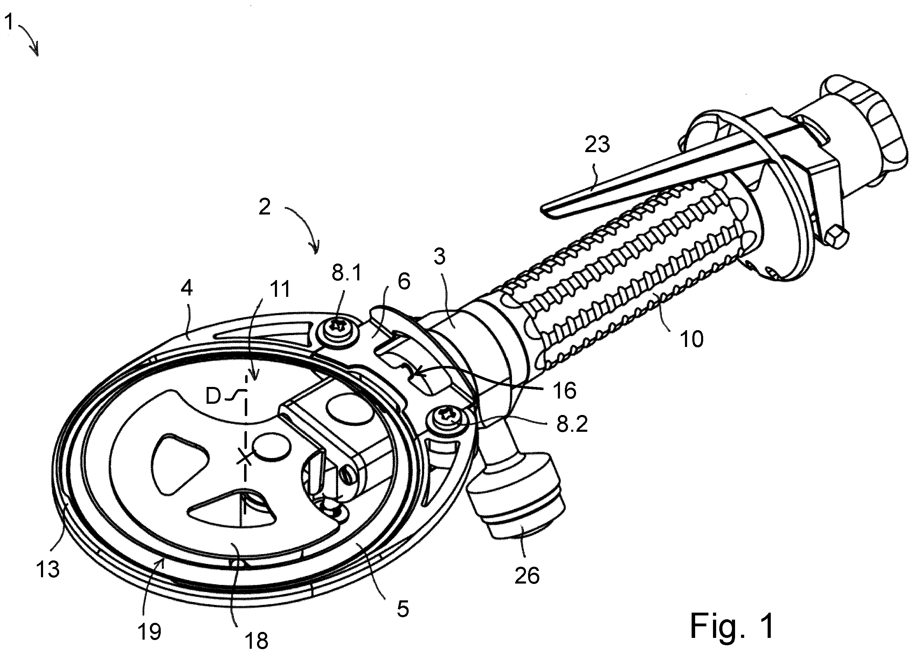

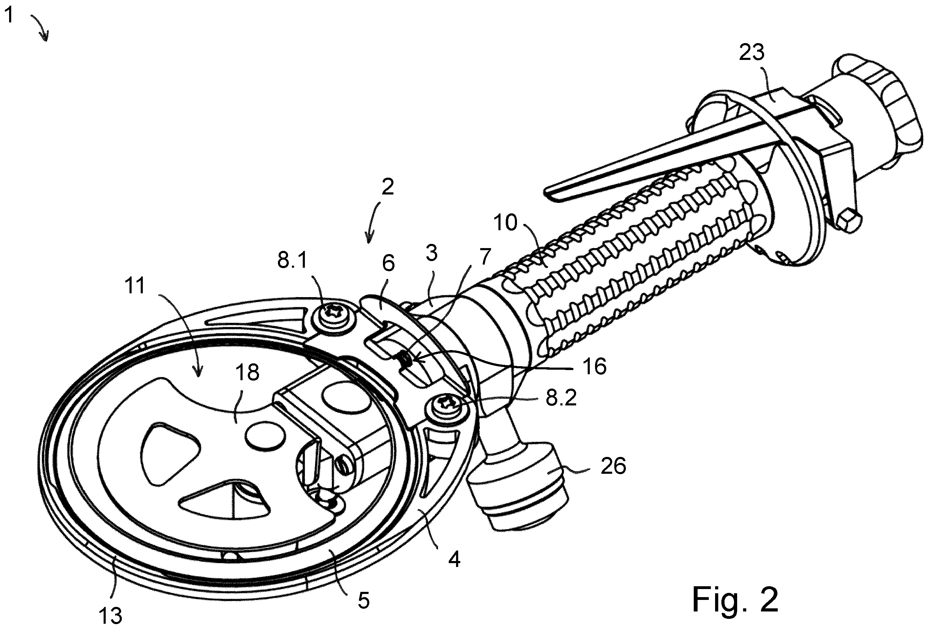

Ein erstes Ausführungsbeispiel eines erfindungsgemäßen Fleisch-Trimmers 1 ist in den Fig. 1 und 2 angegeben. Der Fleisch-Trimmer 1 ist als ein Handwerkzeug ausgebildet und umfasst einen im Wesentlichen zylindrisch ausgebildeten Handgriff 10, welcher von einem Bediener umgriffen werden kann. Weiter umfasst der Fleisch-Trimmer 1 ein erfindungsgemäßes Messer-Schnellwechselsystem 2, welches über ein Getriebegehäuse 3 an einer ersten Stirnseite des Handgriffs 10 festgelegt ist.

Das Messer-Schnellwechselsystem 2 dient der Aufnahme eines ringförmigen Kreismessers 5 und ermöglicht eine werkzeuglose De-/Montage des Kreismessers 5. Zur Aufnahme und Führung des Kreismessers 5 weist das Messer-Schnellwechselsystem 2 eine im Wesentlichen ringförmige Messerführung 4 auf, welche über zwei hier als Kreuzschrauben ausgebildete erste Verbindungsmittel 8.1, 8.2 an dem Getriebegehäuse 3 montiert ist. Die Messerführung 4 weist eine kreisförmige Entnahmeöffnung 11 auf, durch die das Kreismessers 5 in die Messerführung 4 eingelegt beziehungsweise daraus entnommen werden kann.

Im Betrieb des Fleisch-Trimmers 1 ist das Kreismessers 5 um eine Drehachse D rotierend angetrieben über ein in dem Getriebegehäuse 3 aufgenommenes, figürlich nicht dargestelltes Zahnrad beziehungsweise Ritzel. Der Antrieb des Zahnrads beziehungsweise Ritzels wiederum erfolgt über einen figürlich nicht dargestellten, externen Antriebsstrang mit einem elektrischen Motor und mit einer daran gekoppelten biegeflexiblen Antriebswelle, welche an einer dem Messer-Schnellwechselsystem 2 gegenüberliegenden zweiten Stirnseite des Handgriffs 10 in denselben einschiebbar ist.

Der Fleisch-Trimmer 1 sieht in diesem Ausführungsbeispiel einen an dem Handgriff 10 gehaltenen Bedienhebel 23 vor, über welchen der Antrieb des Kreismessers 5 gestartet beziehungsweise gestoppt werden kann. Die biegeflexible Antriebswelle des Antriebsstrangs kann hierfür über den Bedienhebel 23 axial in dem Handgriff 10 verschoben werden, sodass die biegeflexible Antriebswelle mit dem Zahnrad beziehungsweise Ritzel in Eingriff und außer Eingriff verbringbar ist. Der Bedienhebel 23 dient insofern als ein Sicherheitselement, und muss zur Inbetriebnahme beziehungsweise zum Antrieb des Kreismessers 5 von einem Bediener aus einer in Fig. 1 gezeigte Ruhestellung aktiv zum Handgriff 10 hin angelegt werden in eine Betriebsstellung. Ein Loslassen des Bedienhebels 23 führt insofern automatisch dazu, dass die biege flexible Antriebswelle von dem Zahnrad beziehungsweise Ritzel entkoppelt und damit der Antrieb des Kreismessers 5 gestoppt wird.

Um eine schnelle und werkzeuglos De-/Montage des Kreismessers 5 zu ermöglichen, sieht das erfindungsgemäße Messer-Schnellwechselsystem 2 als ein erfindungswesentliches Merkmal ein radial in Bezug auf die Drehachse D des Kreismessers 5 vor und zurück verschiebbares Arretierelement 6 vor. Das Arretierelement 6 ist hier zwischen den ersten Verbindungsmitteln 8.1, 8.2 angeordnet, wobei Köpfe der als Schrauben ausgebildeten ersten Verbindungsmittel 8.1, 8.2 das Arretierelement verliersicher an der Messerführung 4 halten.

Um ein Verschieben des Arretierelements 6 ohne ein Lösen der ersten Verbindungsmittel 8.1, 8.2 und damit ohne Werkzeug zu ermöglichen, ist das Arretierelement 6 in Bezug auf die Drehachse D des Kreismessers 5 mit einem axialen Spiel S zwischen den Köpfen der ersten Verbindungsmittel 8.1, 8.2 und der Messerführung 4 gehalten.

Fig. 1 zeigt das Arretierelement 6 des Messers-Schnellwechselsystems 2 in einer Freigabestellung, in der das Arretierelements 6 in Bezug auf die Drehachse D des Kreismessers 5 radial nach außen, das heißt zum Handgriff 10 hin verschoben ist. Das Arretierelement 6 ist hierbei auf eine Position außerhalb der Entnahmeöffnung 11 der Messerführung 4 verschoben, sodass die Entnahmeöffnung 11 jedenfalls durch das Arretierelement 6 freigelegt ist und insofern das Kreismesser 5 aus der Entnahmeöffnung 11 herausgenommen beziehungsweise in diese hineingesetzt werden kann.

Das Arretierelement 6 ist in der Freigabestellung gegen ein hier als eine Schraubenfeder ausgebildetes Kraftmittel 7 verschoben. Das Kraftmittel 7 bringt eine Stellkraft auf, die radial zur Drehachse D des Kreismessers 5 hin gerichtet ist und das Arretierelement 6 ohne ein aktives Zutun eines Bedieners in der Arretierstellung als eine Vorzugs- beziehungsweise Ruhestellung hält. Insofern ist vom Bediener eine Handkraft größer der Stellkraft des Kraftmittels 7 aufzubringen, um das Arretierelement 6 aus der Arretierstellung in die in Fig. 1 dargestellte Freigabestellung zu verbringen. Ein unbeabsichtigtes Verlieren des Kreismessers 5 aus der Messerführung 4 ist somit verhindert und damit ein sicherer Betrieb des Fleisch-Trimmers 1 sichergestellt.

Die Fig. 2 zeigt das Arretierelement 6 in der Arretierstellung. Das Arretierelement 6 ragt hierbei radial in die Entnahmeöffnung 11 der Messerführung 4 hinein und überdeckt das Kreismesser 5, sodass eine Entnahme des Kreismessers 5 aus der Messerführung 4 durch das Arretierelement 6 blockiert ist. Zusätzlich zu dem Arretierelements 6 ist das Kreismesser 5 über einen in Bezug auf die Drehachse D des Kreismessers 5 auf axial gleicher Höhe zu dem Arretierelement 6 angeordneten und dem Arretierelement 6 radial gegenüberliegenden Vorsprung 13 der Messerführung 4 gehalten. Zudem weist die Messerführung 4 einen axial beabstandet zu dem Vorsprung 13 und dem Arretierelement 6 angeordneten Stützvorsprung 24 auf.

Das als Schraubenfeder ausgebildete Kraftmittel 7 ist zwischen einer Gehäuseausnehmung 16 des Getriebegehäuses 3 und einem nasenförmig längserstreckten Führungssteg 17 des Arretierelements 6 sicher geführt, wobei der Führungssteg 17 abschnittsweise in die Schraubenfeder hineinragt und wobei die Schraubenfeder mit einem gegenüberliegenden Ende abschnittsweise in die Gehäuseausnehmung 16 aufgenommen ist.

Der erfindungsgemäße Fleisch-Trimmer 1 nach Fig. 1 weist zudem eine Schnitttiefenverstellung 18 sowie ein dem Getriebegehäuse 3 zugeordnetes Fettreservoir 26, in dem ein Schmiermittel für das Zahnrad beziehungsweise Ritzel aufgenommen ist, auf.

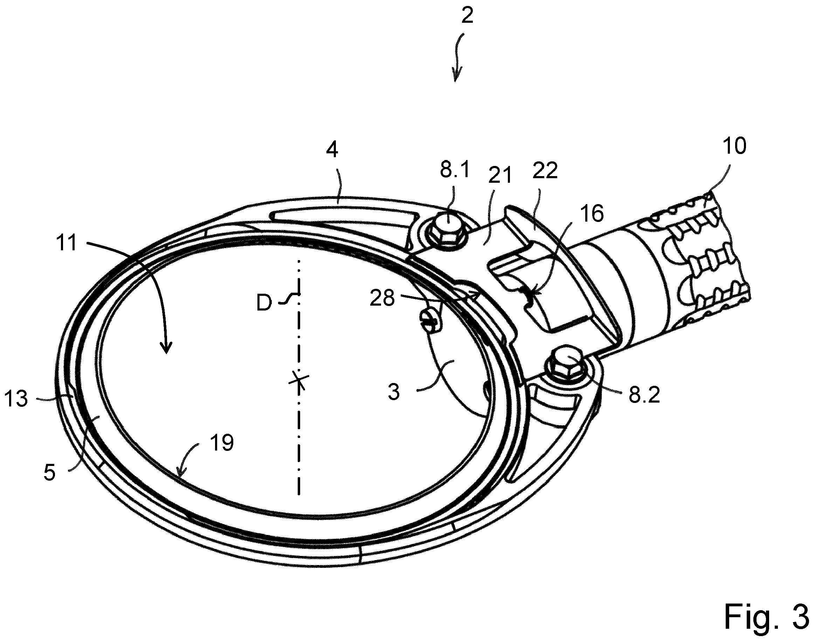

Ein zweites Ausführungsbeispiel eines erfindungsgemäßen Fleisch-Trimmers 1 ist in den Figuren 3 bis 6 angegeben. Der Fleisch-Trimmer 1 weist hier wie gehabt einen Handgriff 10 und ein daran über das Getriebegehäuse 3 festgelegtes erfindungsgemäßes Messer-Schnellwechselsystem 2 auf.

Das Messer-Schnellwechselsystem 2 umfasst wie gehabt zusätzlich zu dem Getriebegehäuse 3 die ringförmige Messerführung 4 mit der kreisförmigen Entnahmeöffnung 11 zur Aufnahme des Kreismessers 5, sowie das radial in Bezug auf die Drehachse des Kreismessers 5 verschiebbar gelagerte Arretierelement 6. Auch sind hier zwei als Schrauben ausgebildete erste Verbindungsmittel 8.1, 8.2 vorgesehen, über welche das Getriebegehäuse 3 und die Messerführung 4 miteinander verbunden und das Arretierelement 6 verliersicher an der Messerführung 4 gehalten ist. Ebenso ist dem Arretierelement 6 das als Schraubenfeder ausgebildete Kraftmittel 7 zugeordnet, welches das Arretierelement 6 in der Arretierstellung als eine Ruhe-/Vorzugsstellung hält. Das Kraftmittel 7 ist hier ebenfalls zwischen dem Führungssteg 17 des Arretierelements 6 und der Gehäuseausnehmung 16 des Getriebegehäuses 3 geführt.

Abweichend zu dem Ausführungsbeispiel des erfindungsgemäßen Fleisch-Trimmers 1 nach Fig. 1 sind die ersten Verbindungsmittel 8.1, 8.2 hier als Schrauben mit einem Sechskantkopf ausgebildet und es ist auf eine Schnitttiefenverstellung 18 und ein Fettreservoir 26 verzichtet. Im Übrigen stimmen die figürlich dargestellten Ausführungsbeispiele des erfindungsgemäßen Messer-Schnellwechselsystems 2 nach den Figuren 1 bis 6 hinsichtlich ihrer Bauteile und Bauteilfunktionen überein.

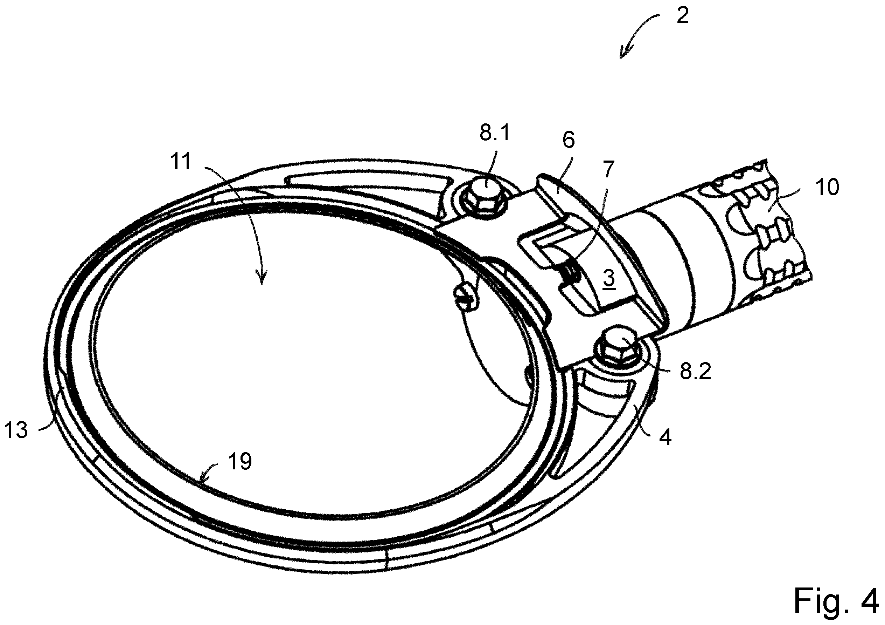

Das Arretierelement 6 ist in Fig. 3 in der Freigabestellung und in Fig. 4 in der Arretierstellung dargestellt.

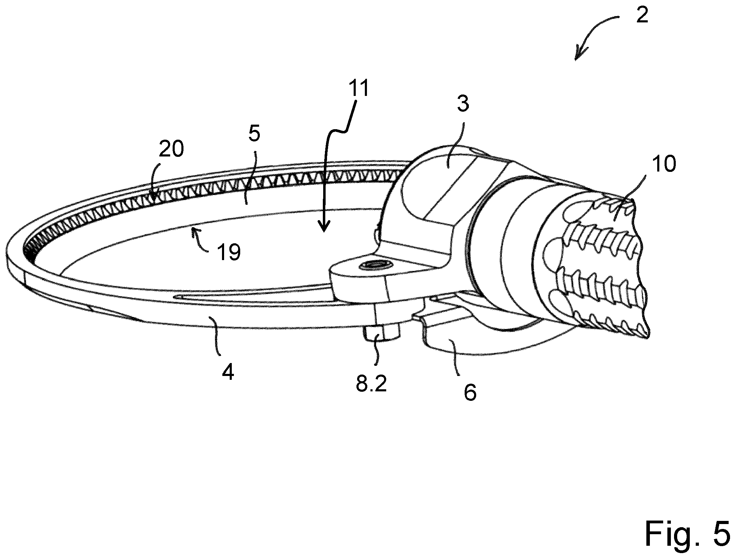

Die Fig. 5 gibt einen Blick auf eine dem Arretierelement 6 in Bezug auf die Drehachse D des Kreismessers 5 axial gegenüberliegende Unterseite der Messerführung 4 an. Das Kreismesser 5 weist einen Zahnkranz 20 auf, über den das Kreismesser 5 mit dem Zahnrad beziehungsweise Ritzel in Eingriff verbringbar sind. Der Zahnkranz 20 ist angelegt an den Stützvorsprung 24 der Messerführung 4. Weiter weist das Kreismesser 5 eine dem Zahnkranz 20 axial gegenüberliegende ringförmige Schneidkante 19 auf.

Das Arretierelement 6 ist in der Arretierstellung in Bezug auf die Drehachse D des Kreismessers 5 radial beabstandet zu der Schneidkante 19 gehalten, sodass die Schneidkante 19 im Betrieb über ihren gesamten Umfang frei zugänglich ist beziehungsweise frei rotieren kann.

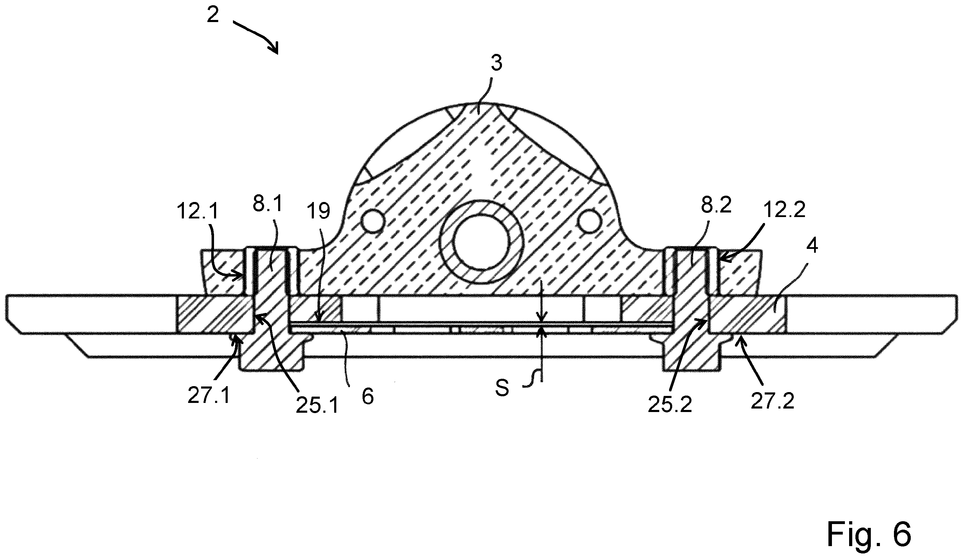

Fig. 6 gibt einen Vollschnitt des erfindungsgemäßen Messer-Schnellwechselsystems 2 geschnitten auf Höhe der ersten Verbindungsmittel 8.1, 8.2 an. Hierin ist veranschaulicht, dass das Arretierelement 6 mit dem in Bezug auf die Drehachse D des Kreismessers 5 axialen Spiel S zwischen den Köpfen der ersten Verbindungsmittel 8.1, 8.2 und der Messerführung 4 angeordnet ist. Das axiale Spiel S wird dadurch ermöglicht, dass die Messerführung 4 auf Höhe des Arretierelements 6 eine ebene Vertiefung 9 aufweist. Die Vertiefung 9 bildet insofern eine ebene Anlagefläche für das Arretierelement 6, welche gegenüber Anschlagflächen 27.1, 27.2 der Messerführung 4 für die Köpfe der ersten Verbindungsmittel 8.1, 8.2 abgesenkt ist. Dies hat den Vorteil, dass die Verbindungsmittel 8.1, 8.2 zum Verschieben des Arretierelements 6 nicht gelockert beziehungsweise gelöst werden müssen und insofern fest angezogen bleiben können.

Die ersten Verbindungsmittel 8.1, 8.2 sind hierbei durch Durchgangsausnehmungen 25.1, 25.2 der Messerführung 4 hindurchgeführt und greifen jeweils in Gewindebohrungen 12.1, 12.2 des Getriebegehäuses 3 ein.

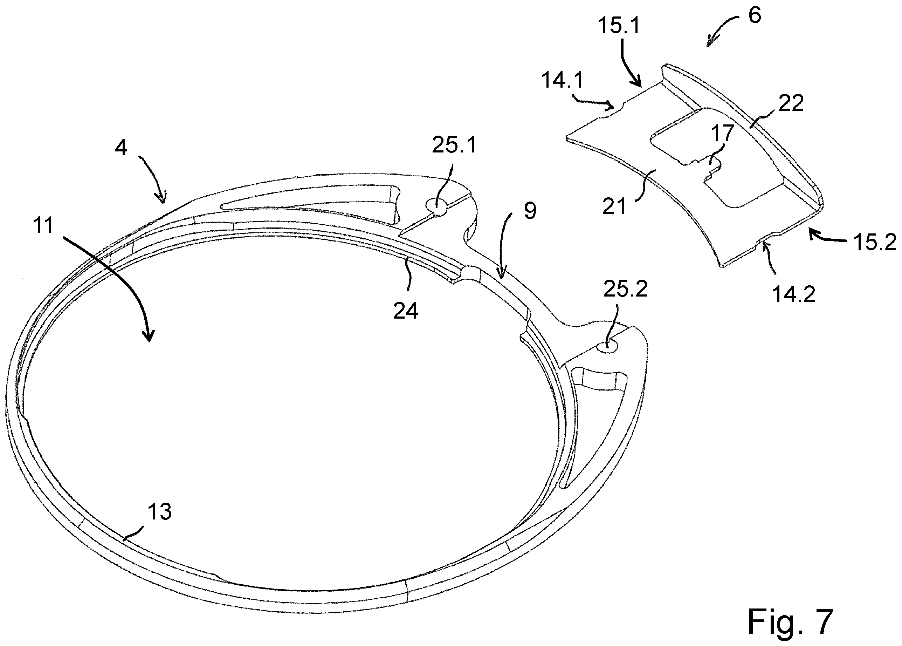

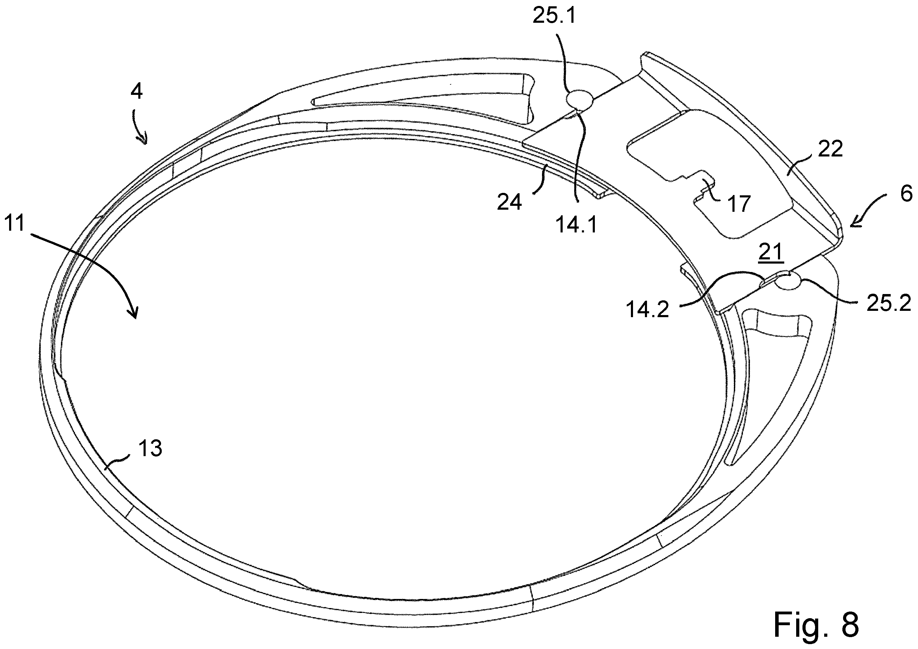

Fig. 7 gibt in einer Explosionsansicht eine Einzelansicht auf die Messerführung 4 und das Arretierelement 6 eines alternativen Ausführungsbeispiels eines erfindungsgemäßen Messer-Schnellwechselsystems 2 an. Als Unterschied zu dem Messer-Schnellwechselsystem 2 nach den Fig. 1 bis 6 weist hier das Arretierelement 6 eine durchgehende, bogenförmige Vorderseite ohne die Ausnehmung 28 auf. Die Vertiefung 9 der Messerführung 4 und das Arretierelement 6 sind längenmäßig aufeinander abgestimmt, sodass das Arretierelement 6 in einer Zusammenbauposition, wie in Fig. 8 dargestellt, in der Vertiefung 9 geführt ist.

Die Durchgangsausnehmungen 25.1, 25.2 der Messerführung 4 ragen abschnittsweise in die Vertiefung 9 hinein, sodass die darin im Zusammenbau aufgenommenen ersten Verbindungsmittel 8.1, 8.2 das dazwischen angeordnete Arretierelement 6 führen. Das Arretierelement 6 weist hierzu an einander gegenüberliegenden Außenseiten 15.1, 15.2 taschenförmige längserstreckte Führungsausnehmungen 14.1, 14.2 zur Aufnahme der ersten Verbindungsmittel 8.1, 8.2 auf. Die taschenförmigen Führungsausnehmungen 14.1, 14.2 und die ersten Verbindungsmittel 8.1, 8.2 bilden insofern Anschläge in Bezug auf die zur Drehachse D radiale Verschiebung des Arretierelements 6, wobei ein Verstellhub des Arretierelements 6 über die Längserstreckung der Führungsausnehmungen 14.1, 14.2 definiert ist. Die Vertiefung 9 und die davon seitlich umgriffenen Außenseiten 15.1, 15.2 des Arretierelements 6 bilden dabei eine Längsführung für das Arretierelement 6.

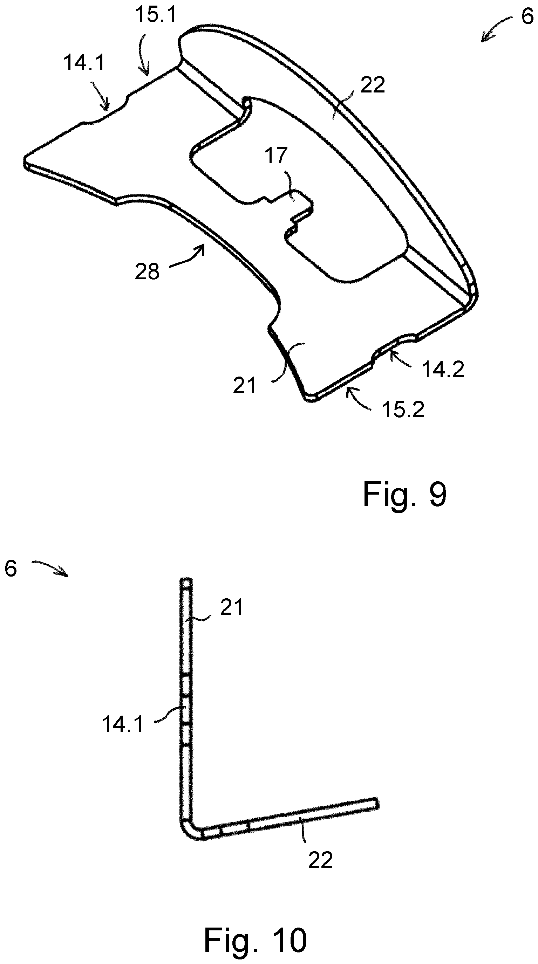

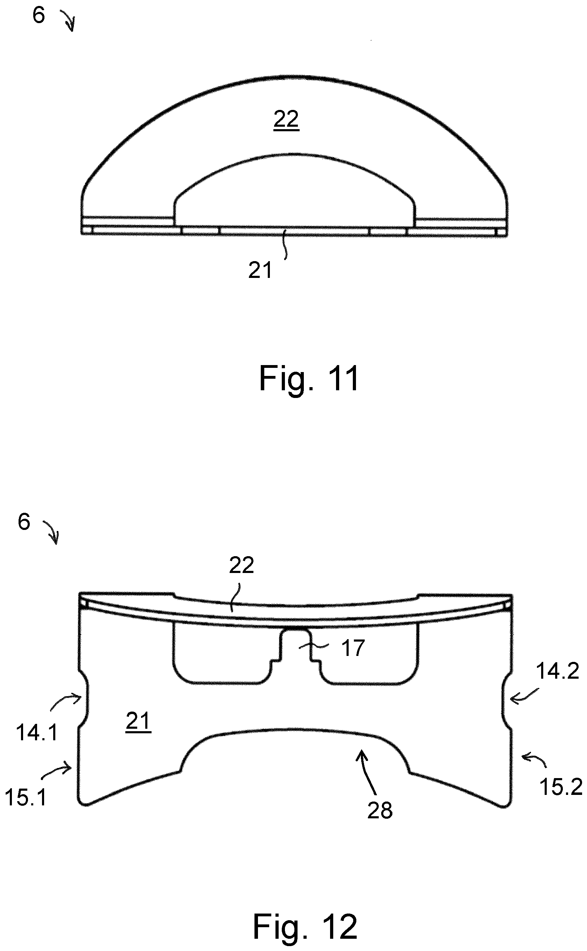

Verschiedene Einzelansichten des Arretierelements 6 des erfindungsgemäßen Messer-Schnellwechselsystems 2 nach den Figuren 1 bis 6 geben die Figuren 9 bis 12 an. Das Arretierelement 6 ist hier als ein symmetrisches Blechbiegebauteil ausgebildet, wobei eine Symmetrieachse mittig durch den Führungssteg 17 verläuft und die Drehachse D des Kreismessers vorzugsweise rechtwinklig schneidet. Das Arretierelement 6 weist einen ebenen Grundabschnitt 21, in welchem die taschenförmigen Führungsausnehmungen 14.1, 14.2 und der Führungssteg 17 ausgebildet sind sowie einen gegenüber dem Grundabschnitt 21 mit einem Winkel im Bereich von 60° bis 90° umgebogenen Griffabschnitt 22 auf. Der Griffabschnitt 22 dient zum Umgreifen des Arretierelements 6 durch einen Bediener, um die Verschiebung des Arretierelements 6 aus der Freigabe- in die Arretierstellung oder zurück auszuführen.

Ferner kommt dem Griffabschnitt 22 eine Sicherheitsfunktion zu, da dieser im Zusammenbau eines erfindungsgemäßen Fleisch-Trimmers 1 gegenüber dem Handgriff 10 abragt und insofern ein Abrutschen einer Hand des Bedieners in Richtung des im Betrieb rotatorisch angetriebenen Kreismessers 5 verhindert. Das Arretierelements 6 ist diesbezüglich so angeordnet, dass der Griffabschnitt 22 zum Handgriff 10 hinzeigend und der Grundabschnitt 21 zum Kreismesser 5 hinzeigend angeordnet sind.

Der erfindungsgemäße Fleisch-Trimmer 1 und das erfindungsgemäße Messer-Schnellwechselsystem 2 sind nicht auf die figürlich dargestellten Ausführungsbeispiele beschränkt. Grundsätzlich sind die Komponenten in Bezug auf ihre Gestalt, Dimensionierung und Materialauswahl in weiten Grenzen frei wählbar.

Es ist bevorzugt vorgesehen, dass das Getriebegehäuse 3 des erfindungsgemäßen Messer-Schnellwechselsystems 2 über wenigstens ein lösbares zweites Verbindungsmittel, vorzugsweise eine Schraube, an dem Handgriff 10 montiert ist, wobei das zweite Verbindungsmittel in Bezug auf eine Antriebsachse des Zahnrads beziehungsweise Ritzels radial beabstandet zu dem Zahnrad beziehungsweise Ritzel angeordnet sind. Diese Anordnung erweist sich als vorteilhaft, wenn in dem Handgriff 10 des erfindungsgemäßen Fleisch-Trimmers 1 eine in Bezug auf die Antriebsachse axial verschiebbar gelagerte biegeflexible Antriebswelle geführt ist. Eine besonders bevorzugte Ausführungsform sieht diesbezüglich vor, dass das Getriebegehäuse 3 einen zylindrischen beziehungsweise rohrförmigen Anschlussschaft aufweist, auf welchen der Handgriff 10 aufgeschoben und daran über das wenigstens zweite Verbindungsmittel an dem Anschlussschaft befestigt ist. Das zweite Verbindungsmittel ist dabei vorzugsweise radial beziehungsweise senkrecht zur Antriebsachse orientiert.

Das erfindungsgemäße Messer-Schnellwechselsystem 2 ist grundsätzlich so konzipiert, dass es an bestehende Fleisch-Trimmer 1 verschiedenen Typs montiert werden kann. Diesbezüglich ist vorstellbar, dass das Getriebegehäuse 3 und die Messerführung 4 in unterschiedlichen Ausführungsformen beziehungsweise Größen bereitgestellt werden.

Gleiche Bauteile und Bauteilfunktionen sind durch gleiche Bezugszeichen gekennzeichnet.

## Patentansprüche

1. Messer-Schnellwechselsystem (2) für einen Fleisch-Trimmer (1), welches eine werkzeuglose De-/Montage eines Kreismessers (5) ermöglicht, umfassend
- ein an einen Handgriff (10) des Fleisch-Trimmers (1) montierbares Getriebegehäuse (3),
- eine an dem Getriebegehäuse (3) gehaltene Messerführung (4) mit einer kreisförmigen Entnahmeöffnung (11) zur Aufnahme des darin um eine Drehachse (D) rotierbaren Kreismessers (5),
- ein an dem Getriebegehäuse (3) und/oder der Messerführung (4) über wenigstens ein erstes Verbindungsmittel (8.1, 8.2) gehaltenes Arretierelement (6),
- wobei das Arretierelement (6) radial verschiebbar in Bezug auf die Drehachse (D) geführt ist derart, dass das Arretierelement (6) aus einer Arretierstellung, in der das Arretierelement (6) jedenfalls abschnittsweise in die Entnahmeöffnung (11) hineinragt, verbringbar ist in eine Entnahmestellung, in der die Entnahmeöffnung (11) gegenüber dem Arretierelement (6) freigelegt ist, und zurück,
- wobei in dem Getriebegehäuse (3) und/oder der Messerführung (4) eine Vertiefung (9) vorgesehen ist und das Arretierelement (6) mit einem in Bezug auf die Drehachse (D) axialen Spiel (S) zwischen dem ersten Verbindungsmittel (8.1, 8.2) und der Vertiefung (9) gehalten ist und
- wobei dem Arretierelement (6) ein Kraftmittel (7) zugeordnet ist, welches in einer Ruhestellung eine zur Drehachse (D) gerichtete und das Arretierelement (6) in der Arretierstellung haltende Stellkraft aufbringt.

2. Messer-Schnellwechselsystem (2) nach Anspruch 1, **dadurch gekennzeichnet, dass** das wenigstens eine erste Verbindungsmittel (8.1, 8.2) ein lösbares Verbindungsmittel und bevorzugt eine in einer Gewindebohrung aufgenommene Schraube ist.

3. Messer-Schnellwechselsystem (2) nach Anspruch 1 oder 2, **dadurch gekennzeichnet, dass** das Arretierelement (6) wenigstens eine längserstreckte Führungsausnehmung (14.1, 14.2) aufweist, in der das erste Verbindungsmittel (8.1, 8.2) geführt ist.

4. Messer-Schnellwechselsystem (2) nach Anspruch 3, **dadurch gekennzeichnet, dass** zwei erste Verbindungsmittel (8.1, 8.2) vorgesehen sind und dass das Arretierelement (6) an zwei einander gegenüberliegenden Außenseiten (15.1, 15.2) jeweils eine taschenförmige längserstreckte Führungsausnehmung (14.1, 14.2) aufweist, in der jeweils eines der ersten Verbindungsmittel (8.1, 8.2) geführt ist.

5. Messer-Schnellwechselsystem (2) nach Anspruch 3 oder 4, **dadurch gekennzeichnet, dass** über eine Länge der wenigstens einen längserstreckten Führungsausnehmung (14.1, 14.2) ein Verstellhub des Arretierelements (6) definiert ist.

6. Messer-Schnellwechselsystem (2) nach einem der Ansprüche 1 bis 5, **dadurch gekennzeichnet, dass** über das wenigstens eine erste Verbindungsmittel (8.1, 8.2) die Messerführung (4) an dem Getriebegehäuse (3) gehalten ist.

7. Messer-Schnellwechselsystem (2) nach einem der Ansprüche 1 bis 6, **dadurch gekennzeichnet, dass** das Kraftmittel (7) jedenfalls abschnittsweise in einer Gehäuseausnehmung (16) des Getriebegehäuses (3) aufgenommen ist.

8. Messer-Schnellwechselsystem (2) nach einem der Ansprüche 1 bis 7, **dadurch gekennzeichnet, dass** das Kraftmittel (7) eine Spiralfeder ist.

9. Messer-Schnellwechselsystem (2) nach einem der Ansprüche 3 bis 8, **dadurch gekennzeichnet, dass** das Arretierelement (6) einen parallel zu der Führungsausnehmung (14.1, 14.2) längserstreckten und in das Kraftmittel (7) eingreifenden Führungssteg (17) aufweist.

10. Messer-Schnellwechselsystem (2) nach einem der Ansprüche 1 bis 9, **dadurch gekennzeichnet, dass** die Messerführung (4) wenigstens einen in die Entnahmeöffnung (11) hineinragenden und dem Arretierelement (6) auf gleicher Höhe und in Bezug auf die kreisförmige Entnahmeöffnung (11) im Wesentlichen gegenüberliegenden Vorsprung (13) und/oder einen axial beabstandet zu dem Vorsprung (13) und/oder dem Arretierelement (6) angeordneten Stützvorsprung (24) aufweist.

11. Messer-Schnellwechselsystem (2) nach einem der Ansprüche 1 bis 10, **dadurch gekennzeichnet, dass** das Arretierelement (6) einen an dem Getriebegehäuse (3) und/oder der Messerführung (4) angelegten Grundabschnitt (20), in dem die wenigstens eine längserstreckte Führungsausnehmung (14.1, 14.2) und/oder der Führungssteg (17) ausgebildet sind, sowie einen gegenüber dem Grundabschnitt (20) umgebogenen und von dem Getriebegehäuse (3) und/oder der Messerführung (4) vorzugsweise mit einem Winkel im Bereich von 60° bis 90° abragenden, handgriffseitig angeordneten Griffabschnitt (21) aufweist.

12. Fleisch-Trimmer (1) umfassend einen Handgriff (10) und ein daran gehaltenes Messer-Schnellwechselsystem (2) nach einem der Ansprüche 1 bis 10, wobei sich ein Getriebegehäuse (3) des Messer-Schnellwechselsystems (2) an den Handgriff (10) anschließt und wobei an einer dem Handgriff (10) gegenüberliegenden Seite des Getriebegehäuses (3) eine Messerführung (4) des Messer-Schnellwechselsystems (2) gehalten ist, weiter umfassend ein in dem Getriebegehäuse (3) aufgenommenes und rotatorisch antreibbares Zahnrad, und umfassend ein in einer kreisförmigen Entnahmeöffnung (11) der Messerführung (4) um eine Drehachse (D) rotierbar gelagertes Kreismesser (5) mit einer Schneidkante (19) und mit einem der Schneidkante (19) gegenüberliegend angeordneten und mit dem Zahnrad in Eingriff stehenden Zahnkranz (20), wobei zur werkzeuglosen De-/Montage des Kreismessers (5) ein in Bezug auf die Drehachse (D) des Kreismessers (5) radial verschiebbares Arretierelement (6) des Messer-Schnellwechselsystems (2) einem Kraftmittel (7) entgegenwirkend in eine Freigabestellung verbringbar ist, in der eine Entnahmeöffnung (11) der Messerführung (4) gegenüber dem Arretierelement (6) freigelegt ist.

13. Fleisch-Trimmer (1) nach Anspruch 12, **dadurch gekennzeichnet, dass** in dem Handgriff (10) eine mit einem externen Antriebsmotor verbundene biegeflexible Antriebswelle rotierbar und axial verschiebbar geführt ist, wobei die biegeflexible Antriebswelle über einen an dem Handgriff (10) gehaltenen Bedienhebel (23) mit dem in dem Getriebegehäuse (3) aufgenommenen Zahnrad in Eingriff und/oder außer Eingriff verbringbar ist und/oder wobei das Getriebegehäuse (3) und der Handgriff (10) über wenigstens ein lösbares zweites Verbindungsmittel miteinander verbunden sind, wobei das zweite Verbindungsmittel in Bezug auf eine Rotationsachse des in dem Getriebegehäuse (3) aufgenommenen Zahnrads radial beabstandet zu dem Zahnrad angeordnet ist.
